# EUROPÄISCHE PATENTSCHRIFT

(11) **EP 2 130 354 B1**
(45) Veröffentlichungstag und Bekanntmachung des Hinweises auf die Patenterteilung: **21.12.2011**
(21) Anmeldenummer: 08734754.8
(22) Anmeldetag: 25.03.2008
(51) Int. Cl.: H04L 29/08

(54) **DRAHTLOS ANSTEUERBARE ELEKTRISCHE FUNKTIONSEINHEIT FÜR EIN LUFTFAHRZEUG**
WIRELESSLY CONTROLLABLE ELECTRICAL FUNCTIONAL UNIT FOR AN AIRCRAFT
UNITÉ FONCTIONNELLE ÉLECTRIQUE À COMMANDE SANS FIL POUR AÉRONEF

(30) Priorität: 23.03.2007 EP 07006103
(43) Veröffentlichungstag der Anmeldung: 09.12.2009
(73) Patentinhaber: Lufthansa Technik AG, 22335 Hamburg (DE)
(72) Erfinder: MUIRHEAD, Andrew, 22848 Norderstedt (DE)
(74) Vertreter: Glawe, Delfs, Moll
(86) Internationale Anmeldenummer: PCT/EP2008/002351
(87) Internationale Veröffentlichungsnummer: WO 2008/116626

(56) Entgegenhaltungen:
- US-A1- 2006 032 979
- US-A1- 2006 109 811
- US-A1- 2006 246 892
- ELENA MALYKHINA: "New Jets Will Come Equipped with RFID" INFORMATION WEEK, 29. November 2004 (2004-11-29), XP002435429 www.informationweek.com

## Beschreibung

Die Erfindung betrifft ein Luftfahrzeug, mit einer Mehrzahl von untereinander austauschbaren, drahtlos ansteuerbaren elektrischen oder elektronischen Funktionseinheiten, die zur Benutzung durch Passagiere vorgesehen und einem Sitz oder einer Gruppe von Sitzen zugeordnet sind, und einer Mehrzahl von Einbauorten für diese Funktionseinheiten, wobei jeder Einbauort einen Sitz oder einer Gruppe von Sitzen zugeordnet ist.

Die Elektronik, insbesondere Unterhaltungselektronik, an Bord eines Passagierflugzeugs wird zunehmend komplexer. Beispielsweise ist es inzwischen Standard, dass zumindest in der First und Business Class von Passagierflugzeugen an jedem Sitz individuelle Audio- und/oder Videoinhalte abrufbar sind. Entsprechende Funktionseinheiten müssen demnach individuell steuerbar sein und mit verschiedenen Inhalten gespeist werden können. US 2006/0032979 A1 offenbart ein System zur Bestimmung der Konfiguration einer Kabine eines Flugzeugs.

Der Erfindung liegt die Aufgabe zu Grunde, eine Luftfahrzeug der eingangs genannten Art zu schaffen, das mit geringem Aufwand bei Installation und Wartung mit solchen Funktionseinheiten ausgerüstet werden kann.

Gelöst wird diese Aufgabe durch folgende Merkmale:
a) die Funktionseinheiten sind Removable Parts, die ohne Erlöschen der Betriebsgenehmigung des Luftfahrzeugs im Zuge von Wartungsarbeiten ein- und ausgebaut bzw. ausgetauscht werden können;
b) jede Funktionseinheit weist eine als RFID-Reader ausgebildete berührungslos arbeitende Einrichtung zum Identifizieren ihres Einbauortes auf, sowie eine Einrichtung zur drahtlosen Übermittlung des identifizierten Einbauortes an und Speicherung in einer Datenbank des Luftfahrzeugs;
c) jedem Einbauort ist ein RFID-Tag zugeordnet, der von dem RFID-Reader auslesbare Informationen enthält, die den zugehörigen Sitz oder die Gruppe von Sitzen identifiziert.

Zunächst werden einige im Rahmen der Erfindung verwendete Begriffe erläutert.

Eine elektrische oder elektronische Funktionseinheit ist jede Gruppe von Bauteilen, die als Ganzes eine bestimmte Funktion ausführen kann, beispielsweise Steuerungs- oder Kontrollfunktionen, Ein- bzw. Ausgabe von Daten, insbesondere Audio- und/oder Videodaten oder dergleichen.

Die Funktionseinheit ist drahtlos ansteuerbar. Dies bedeutet, dass sie drahtlos (vorzugsweise durch elektromagnetische Strahlung) Steuer- und/oder Kontrollsignale und/oder eingegebene bzw. auszugebende Daten (beispielsweise Audio- und/oder Videodaten) empfangen und/oder senden kann.

Die Funktionseinheit ist ein Removable Part. Dieser luftfahrtrechtliche Begriff bezeichnet eine Einheit, die ohne Erlöschen der Betriebsgenehmigung des Luftfahrzeugs im Zuge von Wartungsarbeiten ein- und ausgebaut bzw. ausgetauscht werden kann. Es handelt sich somit vorzugsweise um Funktionseinheiten bzw. Baugruppen, die nicht unter die Kategorie des sogenannten Required Equipment gemäß EASA Certification Specification, Subpart F, fallen. Bevorzugt handelt es sich um Cabin Entertainment-Einheiten, die der Unterhaltung und/oder Information von Passagieren dienen. Besonders bevorzugt handelt es sich um in einer Sitzumgebung eines Passagiers installierte sogenannte Passenger Entertainment Devices, insbesondere Funktionseinheiten, die eine Ausgabe von Audio- und/oder Videodaten ermöglichen und weiter vorzugsweise einen Bildschirm (Display) aufweisen.

Erfindungsgemäß weist die Funktionseinheit eine Einrichtung zum Identifizieren des Einbauortes im Luftfahrzeug auf. Dies bedeutet, dass nach dem Einbauen der Funktionseinheit im Luftfahrzeug der genaue Einbauort ermittelt und elektronisch an eine lokale Datenbank der Funktionseinheit oder vorzugsweise an eine zentrale Datenbank in einem Rechner des Luftfahrzeugs übermittelt werden kann.

Die Erfindung ermöglicht es, elektrische Funktionseinheiten nach dem Einbau in ein Flugzeug problemlos einem bestimmten Einbauort zuzuordnen und diese drahtlos spezifisch zugeschnitten auf diesen Einbauort anzusteuern bzw. Steuerbefehle von diesem entgegenzunehmen.

Die inzwischen zum Standard gehörende Einrichtung von Video On Demand-Systemen an Bord von Luftfahrzeugen erfordert es, dass jedes Videodisplay an einem Sitz bzw. gegebenenfalls an einer Gruppe von Sitzen individuell mit Inhalten aus einem zentralen Audio/videoserver gespeist werden kann. Im Stand der Technik ist es üblich, zu diesem Zweck zu jedem Sitz sowohl eine Stromversorgung als auch mit dem entsprechenden Server verbundene Signalkabel zu legen, über den der Befehls/Datenaustausch mit dem Audio/videoserver stattfinden kann. Diese Verkabelung bedeutet einen extrem hohen Aufwand.

Grundsätzlich ist es zwar bereits im Stand der Technik bekannt, in Flugzeugen drahtlose Datennetzwerke wie beispielsweise Ethernets oder W-Lans zu installieren. Anders als bei einer festen Verkabelung bedarf es bei einer Kommunikation über ein drahtloses Netzwerk einer genauen Identifikation der Funktionseinheit im drahtlosen Netzwerk. Innerhalb eines drahtlosen Netzwerks nach dem IP-Protokoll weist jede Einheit eine bestimmte MAC-Adresse auf. Diese korrespondiert jedoch nicht mit einem entsprechenden Einbauort im Flugzeug, insbesondere beispielsweise nicht mit einer bestimmten Sitznummer. Wenn ein Passagier auf Sitz 2A einen bestimmten Film anfordert, muss dieser über das drahtlose Netzwerk dem Display am entsprechenden Einbauort übermittelt werden. Dieser korrespondiert nicht ohne weiteres mit der MAC-Adresse des zugehörigen Displays.

Die erfindungsgemäße Einrichtung zum Identifizieren des Einbauortes im Luftfahrzeug ermöglicht die Zuordnung jeder Funktionseinheit mit ihrer MAC-Adresse zu einem bestimmten Einbauort (beispielsweise Sitznummer) und damit eine eindeutige Adressierung dieser Funktionseinheit im drahtlosen Netzwerk anhand des Einbauortes.

Die Einrichtung zum Identifizieren des Einbauortes im Luftfahrzeug arbeitet berührungslos. Dies bedeutet, dass kein mechanischer Kontakt zum Identifizieren des Einbauortes stattfinden muss.

Die Einrichtung zum Identifizieren des Einbauortes im Luftfahrzeug weist wenigstens einen RFID-Tag (Radio Frequency Identification Tag) und wenigstens einen RFID-Reader auf. Der RFID-Reader ist der Funktionseinheit und wenigstens ein RFID-Tag dem Einbauort zugeordnet.

Bei dieser Ausführungsform ist somit jedem Einbauort (beispielsweise Sitz) ein RFID-Tag zugeordnet. Bei diesen im Stand der Technik bekannten Bauteilen handelt es sich um passive Bauelemente, die insbesondere keine eigene Energieversorgung benötigen. Beispielsweise kann beim Einbau eines Sitzes der zugehörige RFID-Tag am vorgesehenen Einbauort des zugehörigen Entertainment-Displays mit der Sitznummer beschrieben werden.

Die Funktionseinheit weist ein aktives RFID-Lesegerät (RFID-Reader) auf. Nach dem Einbau bzw. Austausch einer solchen Funktionseinheit wird dieser Reader aktiviert und liest die zugehörige Sitznummer von dem RFID-Tag. In einer externen Datenbank (beispielsweise im Audio/Videoserver des Luftfahrzeugs) kann jetzt die MAC-Adresse der Funktionseinheit der entsprechenden Sitznummer zugeordnet werden, so dass diese Funktionseinheit jetzt gezielt über ihre Sitznummer ansteuerbar ist.

Das Aktivieren des RFID-Readers kann wahlweise automatisch ausgelöst werden durch den Einbauvorgang der Funktionseinheit oder aber manuell beispielsweise durch Betätigen einer entsprechenden Vorrichtung bzw. eines Schalters oder Tasters an der Funktionseinheit nach deren Einbau. Es ist ebenfalls möglich, nach dem Einbau/Austausch von Funktionseinheiten die RFID-Reader sämtlicher Funktionseinheiten oder einiger Funktionseinheiten zentral über das drahtlose Netzwerk zu aktiveren und auf diese Art und Weise die zugehörige Sitznummer des RFID-Tag auszulesen und der MAC-Adresse der Funktionseinheit zuordnen zu lassen.

Statt RFID-Tags und -Readern sind im Rahmen der Erfindung bspw. auch Barcodes oder sonstige optische Codes und entsprechende Lesegeräte verwendbar.

Im Rahmen der Erfindung ist es bevorzugt, wenn die Funktionseinheit über ein W-Lan drahtlos ansteuerbar ist. Sie ist bei einer bevorzugten Ausführungsform zur Ausgabe von Audio- und/oder Videoinhalten ausgebildet, weist insbesondere vorzugsweise ein entsprechendes Display (Bildschirm) auf. Die Funktionseinheit kann im Rahmen der Erfindung selbst mit Bedien- und Steuerelementen versehen sein, beispielsweise entsprechende Steuertasten aufweisen oder einen Touchscreen aufweisen. Alternativ kann sie über eine weitere separate Funktionseinheit vom Benutzer bedient werden, beispielsweise über eine separate Fernbedienung oder über ein Bedienpanel beispielsweise in der Armlehne des Sitzes getrennt vom eigentlichen Display.

Gegenstand der Erfindung ist somit ein Luftfahrzeug mit einer Mehrzahl von erfindungsgemäßen Funktionseinheiten und einer Mehrzahl von Einbauorten für diese Funktionseinheiten. Jeder Einbauort ist einem Sitz oder einer Gruppe von Sitzen zugeordnet und die erfindungsgemäße Einrichtung zum Identifizieren des Einbauortes im Luftfahrzeug ist zum Identifizieren des Sitzes oder der Gruppe von Sitzen ausgebildet, an denen die entsprechende Funktionseinheit verbaut wird. Jedem Einbauort ist ein RFID-Tag zugeordnet, der den zugehörigen Sitz oder die Gruppe von Sitzen identifiziert. Das Luftfahrzeug weist eine Speichereinrichtung auf (beispielsweise einen entsprechenden Speicher im Audio- und/oder Videoserver), in der die elektronische Adresse jeder Funktionseinheit (MAC-Adresse) einem Sitz oder einer Gruppe von Sitzen zugeordnet ist.

Es ist erfindungsgemäß möglich, dass die entsprechende Speichereinrichtung oder Datenbank auf einer geeigneten Ausgabeeinrichtung wie bspw. einem Display oder Drucker ein sogenanntes "Live Schematic" bereitstellt. Dabei handelt es sich um einen sich selbst aktualisierenden Schaltplan bzw. ein entsprechendes Schaubild der jeweils aktuellen Flugzeugkonfiguration (Sitzplan o.ä.) mit der Darstellung der jeweils eingebauten Removable Parts (z.B. repräsentiert durch deren MAC-Adresse). Ein solcher Live Schematic ist erfindungsgemäß in einfacher und übersichtlicher Weise grafisch darstellbar. Dieser Live Schematic kann zur Durchführung einer Wartungstätigkeit (Maintenance Task) bspw. zusammen mit einer zugehörigen "Jobcard" (wartungsauftrag) ausgedruckt oder auf einem Handheld-PC dargestellt werden. Dies erlaubt dem wartungsmechaniker eine gezielte Instandhaltung bzw. Instandsetzung oder eine nachträgliche Änderung der Einbaukonfiguration, ohne dass er hierzu die genaue Einbauposition eines betreffenden Removable Parts vorher mühsam manuell ermitteln bzw. nach Abschluss der Tätigkeit verifizieren muss.

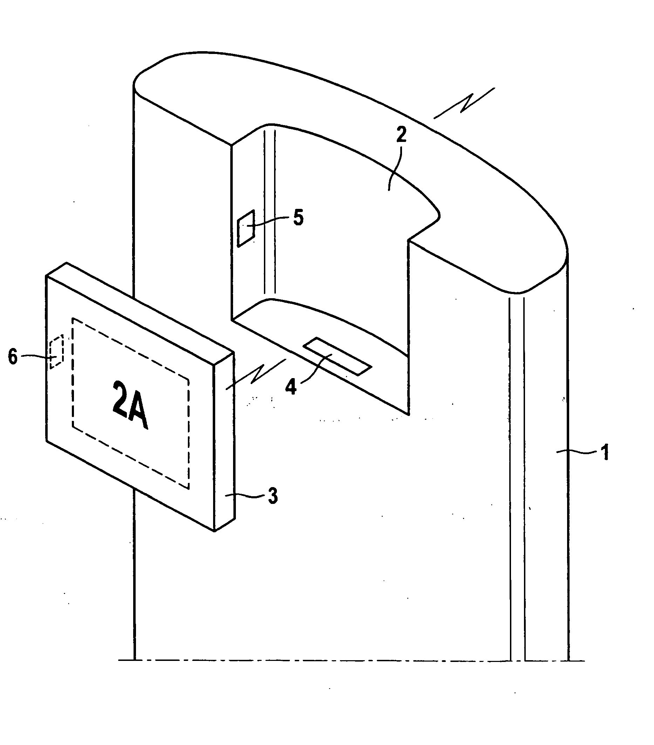

Ein Ausführungsbeispiel der Erfindung wird im Folgenden anhand der zeichnung erläutert. Eine Sitzlehne 1 weist eine Einbaumulde 2 für ein Display 3 eines Cabin-Entertainment-Systems auf. In der Einbaumulde 2 ist ein elektrisches Verbindungselement 4 vorgesehen, über dass das Display 3 mit Betriebsspannung versorgt wird.

In der Einbaumulde 2 ist ein passiver RFID-Tag 5 angeordnet. Beim Einbau des Sitzes wird dieser mit der aktuellen Sitznummer beschrieben und speichert somit als elektronisches Speichermittel permanent die Sitznummer des Einbauortes bzw. der Einbaumulde 2.

Die Display-Einheit 3 ist zur drahtlosen Kommunikation über ein flugzeuginternes W-Lan mit anderen Einheiten, insbesondere einem entsprechenden Audio/videoserver ausgelegt. Sie weist bei 6 einen über die Display-Einheit 3 selbst oder ferngesteuert über das W-Lan von einem entsprechenden zentralen Rechner oder Bedienpaneel aktivierbaren RFID-Reader auf.

Beim Einbau oder nach dem Austausch eines Displays 3 (beispielsweise nach einer Reparatur oder Wartung) gerät der RFID-Tag 5 in der Einbaumulde 2 in Reichweite des RFID-Lesegerätes 6. Es kann jetzt ausgelöst durch den Einbauvorgang oder manuell an der Display-Einheit 3 der RFID-Leser 6 aktiviert werden, um die Sitznummer aus dem RFID-Tag 5 auszulesen und über das drahtlose Netzwerk an einen Zentralrechner zu leiten. In diesem Zentralrechner wird in einer Datenbank die elektronische MAC-Adresse der Display-Einheit 3 zusammen mit der aus dem RFID-Tag 5 ausgelesenen Sitznummer abgelegt. Somit ist die Display-Einheit 3 jetzt über ihre Sitznummer ansteuerbar.

Alternativ kann (beispielsweise nach dem Einbau/Austausch mehrerer oder aller Display-Einheiten 3) der RFID-Lesevorgang zentral von einem Rechner aus gesteuert in mehreren oder allen Display-Einheiten 3 zentral aktiviert werden und die ausgelesenen Sitznummern werden dann zu dem Zentralrechner zurückgeleitet.

Es ist somit erfindungsgemäß möglich, problemlos eine Mehrzahl von Displays zur Wartungs- und/oder Reparaturzwecken aus- und wieder einzubauen, ohne sich um die genaue Zuordnung der Display-Einheiten zu den Sitzen kümmern zu müssen. Stattdessen wird nach dem wiedereinbau der aktuelle Einbauort der Display-Einheiten 3 festgestellt und in dem zentralen Rechner des Flugzeugs gespeichert. Wenn jetzt ein Passagier an einem Sitz Audio- und/oder Videoinhalte aus dem Zentralrechner abruft, wird in der Datenbank des Zentralrechners zunächst die zu der entsprechenden Sitznummer zugehörige MAC-Adresse der Display-Einheit 3 aufgerufen und dann die entsprechenden Audio/Videoinhalte über das drahtlose Netzwerk an diese MAC-Adresse geschickt.

## Patentansprüche

1. Luftfahrzeug, mit einer Mehrzahl von untereinander austauschbaren, drahtlos ansteuerbaren elektrischen oder elektronischen Funktionseinheiten (3), die zur Benutzung durch Passagiere vorgesehen und einem Sitz (1) oder einer Gruppe von Sitzen zugeordnet sind, und einer Mehrzahl von Einbauorten (2) für diese Funktionseinheiten, wobei jeder Einbauort einen Sitz (1) oder einer Gruppe von Sitzen zugeordnet ist, **gekennzeichnet durch** folgende Merkmale:
a) die Funktionseinheiten (3) sind Removable Parts, die ohne Erlöschen der Betriebsgenehmigung des Luftfahrzeugs im Zuge von Wartungsarbeiten ein- und ausgebaut bzw. ausgetauscht werden können;
b) jede Funktionseinheit weist eine als RFID-Reader ausgebildete berührungslos arbeitende Einrichtung (6) zum Identifizieren ihres Einbauortes (2) auf, sowie eine Einrichtung zur drahtlosen Übermittlung des identifizierten Einbauortes an und Speicherung in einer Datenbank des Luftfahrzeugs;
c) jedem Einbauort ist ein RFID-Tag zugeordnet, der von dem RFID-Reader (6) auslesbare Informationen enthält, die den zugehörigen Sitz (1) oder die Gruppe von Sitzen identifiziert.

2. Luftfahrzeug nach Anspruch 1, **dadurch gekennzeichnet, dass** die Funktionseinheiten (3) über ein W-Lan drahtlos ansteuerbar sind.

3. Luftfahrzeug nach Anspruch 1 oder 2, **dadurch gekennzeichnet, dass** die Funktionseinheiten (3) Cabin Entertainment-Einheiten sind.

4. Luftfahrzeug nach Anspruch 3, **dadurch gekennzeichnet, dass** die Funktionseinheiten (3) zur Ausgabe von Audio- und/oder Videoinhalten ausgebildet ist.

5. Luftfahrzeug nach einem der Ansprüche 1 bis 4, **dadurch gekennzeichnet, dass** die Funktionseinheiten (3) ein Display aufweisen.

6. Luftfahrzeug nach einem der Ansprüche 1 bis 5, **dadurch gekennzeichnet, dass** es eine Datenbank aufweist, in der die elektronische Adresse jeder Funktionseinheit einem Sitz (1) oder einer Gruppe von Sitzen zugeordnet ist.

## Claims

1. Aircraft, having a plurality of wirelessly controllable electrical or electronic functional units (3) which can be interchanged with one another, are intended for use by passengers and are associated with a seat (1) or a group of seats, and having a plurality of installation locations (2) for these functional units, with each installation location being associated with a seat (1) or a group of seats, **characterized by** the following features:
a) the functional units (3) are removable parts which can be installed and removed and/or replaced without cancellation of the operating clearance of the aircraft during maintenance work;
b) each functional unit has a device (6) which operates in a non-contacting manner and is in the form of an RFID reader, for identification of its installation location (2), as well as a device for wireless transmission of the identified installation location and storage in a database in the aircraft;
c) each installation location has an associated RFID tag which contains information which can be read by the RFID reader (6) and identifies the associated seat (1) or the group of seats.

2. Aircraft according to Claim 1, **characterized in that** the functional units (3) are wirelessly controllable via a WLAN.

3. Aircraft according to Claim 1 or 2, **characterized in that** the functional units (3) are cabin entertainment units.

4. Aircraft according to Claim 3, **characterized in that** the functional units (3) are designed to output audio and/or video content.

5. Aircraft according to one of Claims 1 to 4, **characterized in that** the functional units (3) have a display.

6. Aircraft according to one of Claims 1 to 5, **characterized in that** the aircraft has a database in which the electronic address of each functional unit is associated with a seat (1) or a group of seats.

## Revendications

1. Aéronef, comprenant une pluralité d'unités fonctionnelles (3) électriques ou électroniques, interchangeables et à commande sans fil, qui sont prévues pour être utilisées par des passagers et sont attribuées à un siège (1) ou à un groupe de sièges, et une pluralité d'emplacements de montage (2) pour ces unités fonctionnelles, chaque emplacement de montage étant attribué à un siège (1) ou à un groupe de sièges, **caractérisé par** les particularités suivantes :
a) les unités fonctionnelles (3) sont des pièces amovibles qui peuvent être montées et démontées ou échangées dans le cadre d'interventions de maintenance, sans expiration de l'autorisation d'exploiter l'aéronef ;
b) chaque unité fonctionnelle présente un équipement (6), réalisé sous forme de lecteur RFID et fonctionnant sans contact, pour identifier son emplacement de montage (2), ainsi qu'un équipement pour la transmission sans fil de l'emplacement de montage identifié et pour son stockage dans une base de données de l'aéronef ;
c) à chaque emplacement de montage est attribué une étiquette RFID contenant des informations lisibles par le lecteur RFID (6) qui identifient le siège (1) ou le groupe de sièges correspondant.

2. Aéronef selon la revendication 1, **caractérisé en ce que** les unités fonctionnelles (3) peuvent être commandées par l'intermédiaire d'un réseau local sans fil.

3. Aéronef selon la revendication 1 ou 2, **caractérisé en ce que** les unités fonctionnelles (3) sont des unités de divertissement de cabine.

4. Aéronef selon la revendication 3, **caractérisé en ce que** les unités fonctionnelles (3) sont réalisées pour reproduire des contenus audio et/ou vidéo.

5. Aéronef selon l'une quelconque des revendications 1 à 4, **caractérisé en ce que** les unités fonctionnelles (3) présentent un dispositif d'affichage.

6. Aéronef selon l'une quelconque des revendications 1 à 5, **caractérisé en ce qu'**il présente une base de données, dans laquelle l'adresse électronique de chaque unité fonctionnelle est attribuée à un siège (1) ou à un groupe de sièges.
